# EUROPEAN PATENT SPECIFICATION

(11) **EP 1 305 132 B1**
(45) Date of publication and mention of the grant of the patent: **07.03.2007**
(21) Application number: 01960598.9
(22) Date of filing: 31.07.2001
(51) Int. Cl.: B23K 26/08, B23K 26/40

(54) **DEVICE FOR PARTING AND/OR PERFORATING**
VORRICHTUNG ZUM TRENNEN UND/ODER ZUR PEFORIERUNG
DISPOSITIF DE DECOUPAGE ET/OU DE PERFORATION

(30) Priority: 04.08.2000 DE 10038104
(43) Date of publication of application: 02.05.2003
(73) Proprietor: SCA Hygiene Products GmbH, 68305 Mannheim (DE)
(72) Inventor: MÜLLER, Heinz-Jürgen, 68623 Lampertheim (DE); BREDAHL, Gunnar, D-67549 Worms (DE)
(74) Representative: HOFFMANN EITLE
(86) International application number: PCT/EP2001/008842
(87) International publication number: WO 2002/011941

(56) References cited:
- EP-A- 0 549 357
- DE-A- 19 900 986
- FR-A- 2 740 714
- US-A- 4 118 619
- US-A- 4 645 900
- US-A- 5 185 511
- US-A- 5 874 157

## Description

### Background of the Invention

### Field of the Invention

The invention relates to a device for parting and/or perforating webs of material to obtain smaller elements from a relatively larger web or to produce perforations therein, the invention also relates to the use of such a device. Document EP 549357 A discloses such a device and its use. It also discloses incombination the features of the preamble of claim 1.

Webs of material, such as tissue webs are often slit lengthwise or parted crosswise to obtain smaller pieces. This is necessary since tissue fabric is usually produced in relatively wide webs, the shape and size of which needs to be adapted to the intended purpose in each case.

In other applications it is desirable to produce one or more perforations in the tissue web or other continuous web; this often being the case with multi-ply products, although it may be desirable also for single-ply products.

Both parting and perforating the continuous web is required on the fly at a comparatively high speed to permit speedy thruput of the web to be cut or perforated, i.e. no appreciable delay occurring in production due to the slitting, parting or perforation process. The cutting devices used for this purpose are also required to ensure minimum downtime in production, this also involving avoiding a change in tooling due to wear and tear or a change in the cutting or perforation patterns.

At the same time the tools are required to ensure that web flow is minimally affected by the cutting or perforating process, more particularly undesirable wrinkles are to be avoided due to the web "backing up" during cutting.

The cutting devices employed are also required to ensure that other materials included in the tissue web or other webs can be simultaneously parted.

### Prior Art

For parting webs on the fly in production, cutting-based tools are currently employed, functioning such that a blade of a cutting tool comes into contact with the web to be parted and parts it, for example, by a scissors action principle. Where slitting is required in the flow direction of production, rotating cutting disks are also employed which run on a likewise rotating anvil to thus produce the cut.

For cross-cutting, web knives are also known which are applied to rotating cylinders, a scissors cut crosswise to the web being produced by slightly inclined positioning relative to the likewise rotating anvil.

For perforating webs of tissue or similar single and multi-ply web products, a system similar to that of nip cutting is used. This differs from the cutting methods more particularly by the fact that other tools are made use of. Thus, use is made mostly of a perforating roll configured e.g. in the form of a steel roll on which the perforation is positively configured. This perforating roll rolls over a companion roll so that the material guided between the rolls is nipped, resulting in the pattern on the perforating roll being transferred to the nipped material.

Known from US patent 4,118,619 A is a method of perforating paper on the fly, more particularly cigarette filter paper. For this purpose an optical laser beam cutter is used which converts a continuous beam into a train of pulses which are used to perforate the paper on the fly. The system employs a coherent light source for producing the beam. The beam is guided through a system of rotating knives or flaps comprising a plurality of rotary disks, each of which carries one or more annular segmented elements. Selected segments on the ring are formed of a reflective material so that they act as a mirror for the laser beam. The remaining segments are formed as openings enabling the laser beam to pass through the disk. Due to the various openings and reflective surfaces being suitably oriented, rotation of the disks results in the beam being steered cyclically along a plurality of paths by the arrangement of the disks so that target sites selected periodically on a target located in the vicinity, such as paper in the product of cigarette filters, are impinged.

### Summary of the Invention

The invention has the objective of proposing a device for parting and/or perforating single- and multi-ply web material, such as tissue products on the fly which is flexible in application and ensures a consistently good parting and/or perforating line over a lengthy period with minimum maintenance.

This objective is achieved by a device having the features as set forth in claim 1.

The gist of the invention is to employ a laser beam for cutting the single- or multi-ply web product, as a result of which by simply and suitably steering the laser beam, cuts or perforations can be produced both lengthwise and crosswise in a curved shape without requiring the complete system or production line to be converted when a change is made in the parting or peforation pattern. Lengthwise in the following is understood to be in the thruput direction, whereas crosswise is understood to be at an angle thereto. Making use of a laser, whose beam is directed to a single- or multi-ply web running on the fly over a supporting element, thus offers high flexibility of the system and accordingly of the production line in enabling downtime, due to tool changing for new patterns or cutting lines, hitherto requiring the line to be shut down with conventional devices, to be reduced.

Furthermore, in making use of the laser, the material being parted is vaporized by the energy supplied by the laser to the parting line in thus reducing the undesirable wrinkling of the web as may occur due to gaps forming in conventional cutting methods. This is achieved more particularly because the web, in being subjected to a certain tension, is now no longer influenced in its movement and thus making use of a laser for parting web products, more particularly tissue products, also improves the quality of the product.

In conclusion, the device in accordance with the invention has the advantage of reducing maintenance as materializing with conventional system due to cutter wear, this in turn reducing the downtime stemming from having to change the cutters. Now, there is no need to employ special cutters where tissue webs coated, for example, with films are concerned, since the laser beam will likewise part or perforate these.

On top of this, there is now no dust nuisance as with conventional parting or perforating by cutters, since the material at the parting or perforating location is vaporized. In conventional methods this dust nuisance results in reduced quality control in production and thus a reduction in product quality is often involved in conventional methods involving a dust nuisance.

The web material is guided over a supporting roll, which is provided with at least one absorption groove. This absorption groove serves to totally absorb the laser beam penetrating the web material in preventing the beam from being reflected in turn by the web, which would result in the beam being dispersed and thus no longer having sufficiently concentrated energy to cut the web and which could possibly result in scorching.

Preferred embodiments are the subject of dependent claims 2 to 11.

In a preferred arrangement the supporting roll is preferably configured substantially cylindrical in enabling the webs to be steered and guided over the supporting roll with no problem.

The absorption groove comprises to advantage a bevel which deflects the laser beam to an absorption site likewise provided in the groove. Accordingly, this relatively simple geometry ensures reliable absorption of the laser beam for suitable angular relationships between bevel and absorption site as well as angle of incidence of the laser beam.

Advantageously, especially when the laser beam impinges the supporting roll substantially radially, the bevel of the absorption groove forms an angle of 45° to the surface of the cylinder to which the absorption.site is substantially perpendicular. This results in a laser beam impinging the bevelled site perpendicular being deflected through 90° to impinge the absorption site perpendicular and the supporting roll radially. Thus, even when some reflection occurs at the absorption site, which is undesirable, the laser beam is returned by the same way in which it was incident. This prevents any undesirable parting or perforating of the web.

In accordance with another preferred embodiment, the absorption site is configured for high radiation absorption. One way of assuring this is to configure the absorption site jet black, for example, to ensure that the laser beam is not reflected at the absorption site.

In yet another embodiment of the supporting roll, the device is preferably configured so that the laser beam impinges the supporting roll in the region of the absorption groove substantially radially, this in turn helping to achieve total absorption of the beam.

In another simple embodiment, this is made possible, for example, by positioning the laser beam and laser perpendicular above the supporting roll and radially thereto. As an alternative, it is, of course, just as possible to make use of deflection mirrors to steer the laser beam.

Advantageously, a cooling system is integrated in the supporting roll to thus ensure good heat removal of the energy absorbed by the supporting roll. This in turn helps in avoiding scorching of the web elements to be parted or perforated. In combination with simultaneous means of reducing reflection, this more particularly helps in preventing tissue material from being scorched or discolored along the parting edge which, apart from this, results in an unpleasant smell. As already mentioned, avoiding reflection is particularly desirable since a reflected beam can no longer be crisply focussed and is thus incapable of concentrating sufficient energy to part the material. Dispersion of the beam then results in portions bordering the parting edge, although becoming burnt, failing to be parted.

In accordance with still another preferred embodiment at least one deflection mirror is provided in the assembly. Providing a deflection mirror makes it possible to position the laser head outside of the actual parting or perforating arrangement which, for example, facilitates maintenance.

In the simplest case, the deflection mirror is not transparent, it instead redirecting the incident beam exclusively to the tissue web (or a corresponding web product). For example, the laser may be positioned so that the beam is emitted substantially horizontally, to then be oriented vertically by the deflection mirror before then, in conclusion, impinging the supporting roll and more particularly its absorption groove radially.

In accordance with still another advantageous embodiment the deflection mirror is flexibly mounted. By mounting the deflection mirror flexible, i.e. for speedy movement along the web on the move, practically any desired pattern can be applied as the perforation. Then, by simply adjusting the deflection mirror, a change in the pattern in the production line is achievable. This simplifies processing since there is now more freedom in achieving the type of parting or perforation required. Simply deflecting the laser beam via a mirror permits applying practically any desirable perforation pattern to the web.

Advantageously, at least two deflection mirrors are provided, at least one of which is semi-transparent to laser light, thus enabling for a suitably arrangement of the deflection mirrors parting or perforating by a sole laser beam from a sole laser source.

Advantageously, each of the supporting rolls comprises an absorption groove at the locations at which the deflected beams impinge. Alternatively, also one accordingly wide adsorption groove may be provided. In this arrangement the semi-transparent deflection mirrors are arranged to advantage transversely over the web.

In one application of deflection mirrors, which due to their light weight normally permit rapid steering, the laser beam can be deflected to optional contours in achieving flexible parting or a near infinitely variable perforation pattern.

In all of the embodiments as described, it is furthermore to be emphasized an advantage that the web to be worked can now be freely adapted to the necessary requirements in the production line as regards web tension, due to a laser permitting contactless working of the material.

### Brief Description of the Drawings

The invention will now be detailed purely by way of example with reference to the drawings in which:
- Fig. 1: is a diagrammatic illustration of the device in accordance with the invention employing a laser with no deflection mirror;
- Fig. 2 roll;: is a detail illustration of the supporting
- Fig. 3: is a diagrammatic illustration of the device in accordance with the invention including a deflection mirror for deflecting the laser beam;
- Fig. 4: is a diagrammatic illustration of the device in accordance with the invention including three deflection mirrors for implementing multi-web parting;
- Fig. 5: is a diagrammatic illustration of the device in accordance with the invention including a deflection mirror for perforating the web;

### Detailed Description

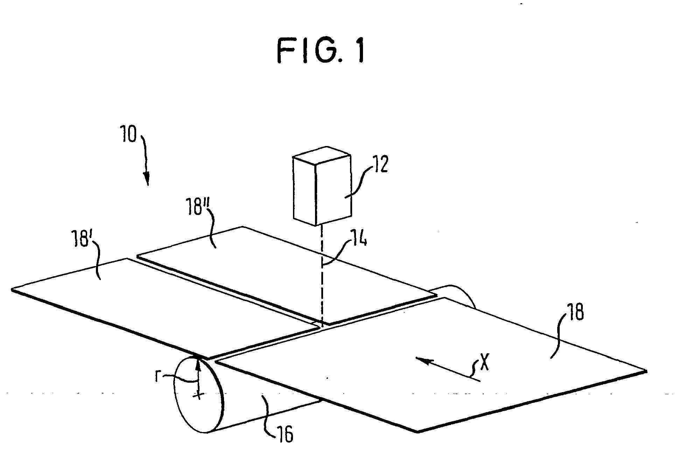

Referring now to Fig. 1 there is illustrated a view in perspective of the device 10 in accordance with the invention.

In this arrangement a laser head 12 emitting a laser beam 14 is positioned vertically above a supporting roll 16 and in a radial direction r relative to the supporting roll 16. The laser beam 14 is oriented so that it impinges the supporting roll 16 substantially radially. Moved on the fly over the supporting roll 16 in the direction of the arrow x is a single- or multi-ply material web 18 for processing, conventional means (not shown) being used for this purpose.

In the embodiment as shown, the material web 18 is slit lengthwise by the laser beam 14, resulting in two narrower material webs 18', 18".

In this arrangement the laser beam 14 impinges the web and subsequently the supporting roll 16, preferably in the region of an absorption groove 20 of the supporting roll 16.

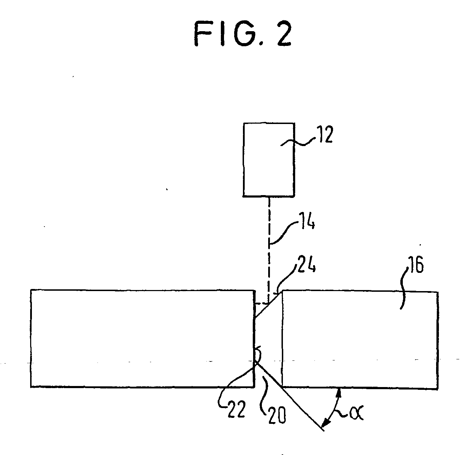

Referring now to Fig. 2 there is illustrated a supporting roll 16 in detail. In this arrangement the supporting roll 16 is configured as a mainly cylindrical roll incorporating an absorption groove 20 at a location in which it is impinged by the laser beam 14 emitted by the laser head 12. The absorption groove 20 in the embodiment as shown consists of a notch, the one absorption site 22 of which runs perpendicular to the cylindrical surface of the supporting roll 16, such that the absorption site 22 is parallel to the laser beam 14 when the laser beam 14 penetrates the web to be processed. The absorption groove 20 has a second site at an angle α of preferably 45° to the surface of the cylinder. This second site 24 is configured as a reflection or deflection site which is impinged by the incident laser beam 14 and deflected through 90° so that it impinges the absorption site 22 perpendicularly. It is to be noted in this respect that the ratio of the angle of the bevelled site 24 to the absorption site 22 is to be adapted especially to the angle of incidence of the laser beam 14, i.e. any change in the angle of incidence likewise requiring the cited angular relationship to be adapted.

The absorption site 22 is made preferably of a material strongly absorbing radiation or coated accordingly, more particularly a jet black coloration of the absorption site 22 being particularly suitable. This ensures that the incident laser beam 14, as reflected by the reflection site 24, is totally absorbed by the absorption site 22 and is not partly re-reflected which would otherwise result in an undesirable dispersion of the laser beam 14.

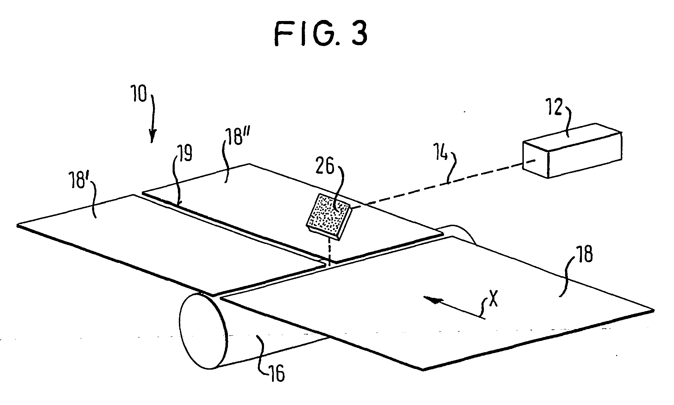

Referring now to Fig. 3 there is illustrated a device 10 likewise used to part, for example, a tissue web. In this arrangement the material web 18 is likewise slit lengthwise, i.e. corresponding to the direction of movement x. Using the laser beam 14 of the laser 12 for this purpose makes for dustless, precision slitting by vaporization of the material at the parting edge 19. It is to be noted in this case, however, that the device in accordance with the invention is suitable not only for perforating or slitting lengthwise but also in any other direction.

In addition to the arrangement as shown in Fig. 1, a deflection mirror 26 is provided in this case which, in the embodiment as shown, is configured as a non-transparent reflection mirror. Providing the deflection mirror 26 enables the laser 12 to be positioned somewhat outside of the actual parting arrangement to thus facilitate access to both the parting arrangement as well as to the laser, for example, for maintenance work.
The deflection mirror 26 may be mounted swivable and/or movable by means of a suitably adjusting mechanism (not shown). Mounting the deflection mirror flexible enables parting cuts other than linear to be implemented, such as, for example, curve-shaped parting cuts, this requiring, however, the assurance that the laser beam 14 still impinges the absorption groove 20 of the supporting roll 16. If the deflection mirror 26 is swivelled or tilted, this can be achieved by a wider absorption groove 20 or by providing several absorption grooves.

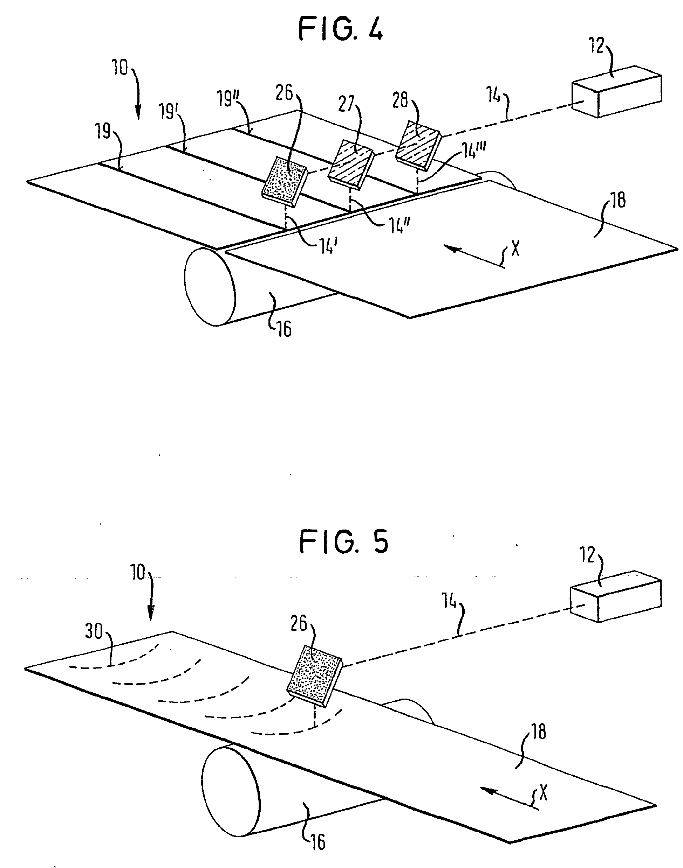

Referring now to Fig. 4 there is illustrated a device 10 in accordance with the invention in which several deflection mirrors are provided, more particularly three deflection mirror 26, 27, 28 being fitted in this arrangement. The deflection mirrors 27 and 28 are configured as semi-transparent mirrors, as a result of which, part of the laser beam is deflected through 90° in the case as shown whilst a further portion of the laser beam penetrates the semi-transparent deflection mirrors 27 or 28 in each case with no change in its direction. This enables the material web 18 to be slit multiply, i.e. in the direction of movement x of the web, in making use of but a single laser head 12 emitting a single laser beam 14.

It is, of course, just as possible to mount the deflection mirrors 26, 27 and 28 movable and swivable so that curved partings are likewise possibly, the deflection mirror 26 in this embodiment being configured likewise non-transparent to laser light.

Providing the three deflection mirrors 26, 27, 28 produces three parting edge 19, 19', 19" which in the embodiment as shown are parallel to each other. However, as already mentioned, curved webs may be produced by mounting deflection mirrors 26, 27, 28 for swivelling or tilting. When each of the deflection mirrors can be steered separately, the partings must not necessarily be parallel.

Advantageously, an absorption groove is provided in the supporting roll 16 for each of the partial laser beams 14', 14", 14'" produced by splitting the laser beam 14 in the embodiment as shown.

Referring now to Fig. 5 there is illustrated how a perforation 30 can be produced in the material web 18 the same as in the device 10 comprising a laser head 12 and a deflection mirror 26. For this purpose, the deflection mirror 26 is mounted flexible and moved so that the laser beam 14 is deflected accordingly for producing round, oval or elongated perforation holes. For this purpose, it is particularly the frequency and duration of pulsing of the laser beam 14 that is adapted.

The salient advantage afforded by the invention is that by providing a laser for parting or perforating web material, which may be single or multi-ply, a flexible assembly is achieved, permitting practically any pattern in parting or perforating the web without any appreciable conversion being needed. More particularly, this eliminates wear of the tool and thus frequent changing of the assembly due to tool wear. A dust nuisance, likewise undesirable, or any change in the tension of the web, or influencing movement of the web, are all likewise prevented.

## Claims

1. A device (10) for parting and/or perforating a single or multi-ply tissue paper (18) comprising a supporting roll (16) as well as a laser assembly included at least one laser head (12) emitting a laser beam (14), **characterized in that** said supporting roll (16) is provided with at least one absorption groove (20).

2. The device (10) as set forth in claim 1, **characterized in that** said supporting roll (16) is substantially cylindrical and said at least one absorption groove (20) comprises a bevel (24) for deflecting said laser beam (14) to an absorption site (22) on said supporting roll (16).

3. The device (10) as set forth in claim 2, **characterized in that** said bevel (24) forms an angle (α) of approx. 45° to said surface of said cylinder and said absorption site (22) is substantially perpendicular to said cylinder surface.

4. The device (10) as set forth in claim 2 or 3, **characterized in that** said absorption site (22) is configured strongly radiation absorbing.

5. The device (10) as set forth in any of the claims 1 to 4, **characterized in that** said laser beam (14) impinges said supporting roll (16) in the region of said absorption groove (20) substantially radially to said supporting roll (16).

6. The device (10) as set forth in any of the preceding claims, **characterized in that** a system for cooling said supporting roll (16) is provided.

7. The device (10) as set forth in any of the claims 1 to 6, **characterized in that** at least one deflection mirror (26, 27, 28) is provided.

8. The device (10) as set forth in claim 7, **characterized in that** said deflection mirror (26, 27, 28) deflects said laser beam (14) so that it impinges the surface of said supporting roll (16) facing said web material substantially perpendicular to said surface.

9. The device (10) as set forth in claim 7 or 8, **characterized in that** said deflection mirror (26, 27, 28) is flexibly mounted.

10. The device (10) as set forth in any of the claims 7 to 9, **characterized in that** at least two deflection mirrors (26, 27, 28) are provided, at least one of which (27, 28) is semi-transparent to laser light.

11. The device (10) as set forth in claim 10, **characterized in that** the number of absorption grooves (20) in said supporting roll (16) is identical to the number of said deflection mirrors (26, 27, 28) for deflecting said light to said supporting roll (16).

12. Use of a device according to any one of claims 1 to 11 for perforating or cutting a single or multi-ply tissue paper.

## Patentansprüche

1. Vorrichtung (10) zum Trennen und/oder Perforieren eines ein- oder mehrlagigen Tissupapiers (18) umfassend eine stützende Walze (16) sowie eine Laseranordnung umfassend wenigstens einen Laserkopf (12), der einen Laserstrahl (14) ausgibt, **dadurch gekennzeichnet, dass** die stützende Walze (16) mit wenigstens einer Absorptionsnut (20) versehen ist.

2. Vorrichtung (10) nach Anspruch 1, **dadurch gekennzeichnet, dass** die stützende Walze (16) im Wesentlichen zylindrisch ist und dass die wenigstens eine Absorptionsnut (20) eine Fase (24) zum Ablenken des Laserstrahls (14) auf eine Absorptionsstelle (22) auf der stützenden Walze (16) umfasst.

3. Vorrichtung (10) nach Anspruch 2, **dadurch gekennzeichnet, dass** die Fase (24) einen Winkel α von ungefähr 45° zu der Fläche des Zylinders bildet und die Absorptionsstelle (22) im Wesentlichen senkrecht zu der zylindrischen Fläche verläuft.

4. Vorrichtung (10) nach Anspruch 2 oder 3, **dadurch gekennzeichnet, dass** die Absorptionsstelle (22) stark strahlenabsorbierend ausgestaltet ist.

5. Vorrichtung (10) nach einem der Ansprüche 1 bis 4, **dadurch gekennzeichnet, dass** der Laserstrahl (14) im Bereich der Absorptionsnut (20) im Wesentlichen radial zur stützenden Walze (16) auf die stützende Walze (16) trifft.

6. Vorrichtung (10) nach einem der vorstehenden Ansprüche, **dadurch gekennzeichnet, dass** ein System zum Kühlen der stützenden Walze (16) vorgesehen ist.

7. Vorrichtung (10) nach einem der Ansprüche 1 bis 6, **dadurch gekennzeichnet, dass** wenigstens ein Ablenkspiegel (26, 27, 28) vorgesehen ist.

8. Vorrichtung (10) nach Anspruch 7, **dadurch gekennzeichnet, dass** der Ablenkspiegel (26, 27, 28) den Laserstrahl (14) derart ablenkt, dass er auf die Fläche der stützenden Walze (16), die dem Bahnmaterial zugewandt ist, im Wesentlichen senkrecht zu der besagten Fläche auftrifft.

9. Vorrichtung (10) nach Anspruch 7 bis 8, **dadurch gekennzeichnet, dass** der Ablenkspiegel (26, 27, 28) flexibel angebracht ist.

10. Vorrichtung (10) nach einem der Ansprüche 7 bis 9, **dadurch gekennzeichnet, dass** wenigstens zwei Ablenkspiegel (26, 27, 28) vorgesehen sind von denen wenigstens einer (27, 28) gegenüber Laserlicht halb transparent ist.

11. Vorrichtung (10) nach Anspruch 10, **dadurch gekennzeichnet, dass** die Anzahl der Absorptionsnuten (20) in der stützenden Walze (16) identisch zur Anzahl der Ablenkspiegel (26, 27, 28) zum Ablenken des Lichts auf die besagte stützende Walze (16) ist.

12. Verwendung einer Vorrichtung nach einem der Ansprüche 1 bis 11 zum Perforieren oder Beschneiden eines ein- oder mehrlagigen Tissupapiers.

## Revendications

1. Dispositif (10) de découpage et/ou perforation de papier mousseline (18) à feuillet unique ou à feuillets multiples, comprenant un rouleau porteur (16) ainsi qu'un appareil à laser comprenant au moins une tête laser (12) qui émet un faisceau laser (14), **caractérisé en ce que**, sur ledit rouleau porteur (16), il y a au moins une rainure d'absorption (20).

2. Dispositif (10) conforme à la revendication 1, **caractérisé en ce que** ledit rouleau porteur (16) est sensiblement cylindrique et ladite rainure d'absorption (20) au nombre d'au moins une comporte un biseau (24) qui sert à dévier ledit faisceau laser (14) vers un site d'absorption (22) dudit rouleau porteur (16).

3. Dispositif (10) conforme à la revendication 2, **caractérisé en ce que** ledit biseau (24) fait un angle (α) d'à peu près 45° avec la surface dudit cylindre, et ledit site d'absorption (22) est sensiblement perpendiculaire à ladite surface du cylindre.

4. Dispositif (10) conforme à la revendication 2 ou 3, **caractérisé en ce que** ledit site d'absorption (22) est conçu pour absorber fortement un rayonnement.

5. Dispositif (10) conforme à l'une des revendications 1 à 4, **caractérisé en ce que** ledit faisceau laser (14) frappe ledit rouleau porteur (16) dans la région de ladite rainure d'absorption (20), dans une direction sensiblement radiale par rapport audit rouleau porteur (16).

6. Dispositif (10) conforme à l'une des revendications précédentes, **caractérisé en ce qu'**il y a un système servant à refroidir ledit rouleau porteur (16).

7. Dispositif (10) conforme à l'une des revendications 1 à 6, **caractérisé en ce qu'**il y a au moins un miroir déflecteur (26, 27, 28).

8. Dispositif (10) conforme à la revendication 7, **caractérisé en ce que** ledit miroir déflecteur (26, 27, 28) dévie ledit faisceau laser (14) de telle manière que celui-ci frappe la surface dudit rouleau porteur (16) qui fait face audit matériau en bande, selon une direction sensiblement perpendiculaire à cette surface.

9. Dispositif (10) conforme à la revendication 7 ou 8, **caractérisé en ce que** ledit miroir déflecteur (26, 27, 28) est monté de manière à pouvoir bouger.

10. Dispositif (10) conforme à l'une des revendications 7 à 9, **caractérisé en ce qu'**il y a au moins deux miroirs déflecteurs (26, 27, 28), dont au moins l'un (27, 28) est semi-transparent pour la lumière du laser.

11. Dispositif (10) conforme à la revendication 10, **caractérisé en ce que** le nombre de rainures d'absorption (20) présentes sur ledit rouleau porteur (16) est identique au nombre desdits miroirs déflecteurs (26, 27, 28) qui dévient ladite lumière vers ledit rouleau porteur (16).

12. Utilisation d'un dispositif conforme à l'une des revendications 1 à 11 pour perforer ou couper un papier mousseline à feuillet unique ou à feuillets multiples.
